# EUROPEAN PATENT APPLICATION

(11) **EP 4 376 206 A1**
(43) Date of publication of application: **29.05.2024**
(21) Application number: 21950561.7
(22) Date of filing: 23.07.2021
(51) Int. Cl.: H01M 50/531, H01M 10/04

(54) **CELL AND ELECTRICAL DEVICE**

(71) Applicant: Ningde Amperex Technology Limited, Ningde, Fujian 352100 (CN)
(72) Inventor: WU, Yingyang, Ningde, Fujian 352100 (CN)
(74) Representative: Icosa
(86) International application number: PCT/CN2021/108183
(87) International publication number: WO 2023/000312

(57) **Abstract**

This application relates to the field of battery technologies, and discloses a battery cell and an electric apparatus. The battery cell includes an electrode assembly, a first tab, and a first filling member. The electrode assembly includes a first electrode plate unit, a second electrode plate unit, and a separator unit stacked together, the first electrode plate unit and the second electrode plate unit have opposite polarities and are alternately arranged along a preset direction, and the separator unit is provided between the first electrode plate unit and the second electrode plate unit that are adjacent. One first electrode plate unit is provided with a first groove, one end of the first tab is mounted in the first groove, the other end extends out of the electrode assembly, and a gap is present between the first tab and a side wall of the first groove. A first filling member is mounted on the second electrode plate unit facing the first groove, the first filling member includes a first extension, and at least part of the first extension is configured to extend into the gap. The battery cell provided in some embodiments of this application can reduce the falling off risk of the active substance within the battery cell.

## Description

### TECHNICAL FIELD

This application relates to the field of battery technologies, and in particular, to a battery cell and an electric apparatus.

### BACKGROUND

A battery cell is an apparatus that converts external energy into electric energy and that stores the electric energy therein, to supply power to an external device (for example, a portable electronic device) as needed. Generally, a battery cell includes a housing, an electrode assembly accommodated in the housing, an electrolyte, and tabs connected to the electrode assembly. The electrode assembly includes a first electrode plate and a second electrode plate that are stacked and a separator disposed between the first electrode plate and the second electrode plate. A tab is fixed to the electrode plate (the first electrode plate or the second electrode plate). Specifically, the electrode plate is provided with a groove, one end of the tab is fixed in the groove, and the other end extends out of the electrode assembly.

However, when the battery cell is subjected to force, the active substance of the electrode plate at the position of the groove is easy to fall off. This may lead to an internal short circuit within the battery, thereby causing safety accidents such as explosion of the battery cell.

### SUMMARY

This application is intended to provide a battery cell and an electric apparatus, so as to reduce the risk that the active substance within the battery cell is easy to fall off.

The following technical solutions are adopted for this application to solve the technical problem.

A battery cell includes an electrode assembly, a first tab, and a first filling member. The electrode assembly includes a first electrode plate unit, a second electrode plate unit, and a separator unit stacked together, the first electrode plate unit and the second electrode plate unit have opposite polarities and are alternately arranged along a preset direction, and the separator unit is provided between the first electrode plate unit and the second electrode plate unit that are adjacent. One first electrode plate unit is provided with a first groove, one end of the first tab is mounted in the first groove, the other end extends out of the electrode assembly, and a gap is present between the first tab and a side wall of the first groove. The first filling member is mounted on the second electrode plate unit facing the first groove, the first filling member includes a first extension, and at least part of the first extension is configured to extend into the gap.

In the battery cells on the current market, the width of a groove on an electrode plate for mounting a tab is generally greater than the width of the tab, facilitating the tab mounting. However, a gap is accordingly formed between a side wall of the groove and the tab, and the presence of this gap is likely to lead to uneven force distribution on the electrode plate therein, which in turn leads to the disadvantages such as falling off of the electrode plate active substance and lithium precipitation at the interface. In contrast, the battery cell according to an embodiment of this application not only includes an electrode assembly and a first tab, but also includes a first filling member, a first extension of the first filling member extending into the foregoing gap. The first extension can reduce or eliminate space for the part of the active substance layer unit near an edge of the first groove to deform towards the first groove, thereby reducing or eliminating the risk of the active substance at the position of the first groove being deformed towards the first groove by force and falling off. In other words, the battery cell according to this embodiment of this application can reduce the risk that the active substance within the battery cell is easy to fall off.

In a further improvement scheme of the foregoing technical solution, the side wall of the first groove includes two first side wall units and a first connecting wall unit, the two first side wall units are arranged opposite each other, the first connecting wall unit is connected to both the two first side wall units, and a first gap is present between at least one first side wall unit and the first tab; and at least part of the first extension is configured to extend into the first gap.

In a further improvement scheme of the foregoing technical solution, the first gap is present between each of the two first side wall units and the first tab. The first filling member includes two first extensions, and at least part of each of the first extensions is configured to extend into the corresponding first gap.

In a further improvement scheme of the foregoing technical solution, the first filling member includes a first base. The second electrode plate unit connected to the first filling member is provided with a first mounting groove at the place corresponding to the first filling member, and the first base is mounted in the first mounting groove; and the first extension is disposed at an end of the first base facing the first groove.

In a further improvement scheme of the foregoing technical solution, the battery cell further includes a first insulating adhesive. The first insulating adhesive is fixed to the second electrode plate unit connected to the first filling member and covers an exposed part of the first filling member relative to the connected second electrode plate unit. In this way, the first insulating adhesive can cover and shield burrs formed during welding of the first filling member, so as to reduce the risk that the burrs formed during the welding between the first filling member and a second current collector unit would puncture the separator unit.

In a further improvement scheme of the foregoing technical solution, the battery cell further includes a first insulating rubber. The first insulating rubber is fixed to the first electrode plate unit connected to the first tab and covers at least part of the opening of the first groove on a side facing the first filling member. In this way, the first insulating rubber can reduce the contact area between the burrs and the separator unit, thereby reducing the risk of the burrs puncturing the separator unit and causing a short circuit of the electrode assembly.

In a further improvement scheme of the foregoing technical solution, two sides of the first electrode plate unit connected to the first tab each are provided with the second electrode plate unit, and the first electrode plate unit connected to the first tab is provided with a second groove on a side facing away from the first groove. The battery cell further includes a second filling member, where the second filling member is mounted on the second electrode plate unit facing the second groove, the second filling member includes a second extension, and at least part of the second extension is configured to extend into the second groove. In this way, when the battery cell is subjected to an external force so that the first electrode plate unit has a tendency to deform towards one side of the second filling member, the second extension can indirectly support a first current collector unit, so as to reduce the risk of the first current collector unit fracturing due to excessive deformation.

In a further improvement scheme of the foregoing technical solution, the second filling member includes two second extensions, and each of the second extensions corresponds to one of the first extensions in position.

In a further improvement scheme of the foregoing technical solution, the battery cell further includes a second insulating adhesive. The second insulating adhesive is fixed to the second electrode plate unit connected to the second filling member and covers an exposed part of the second filling member relative to the connected second electrode plate unit. In this way, the second insulating adhesive can cover and shield burrs formed during the process of welding the second filling member, so as to reduce the risk that the burrs formed during the welding between the second filling member and the second current collector unit would puncture the separator unit.

In a further improvement scheme of the foregoing technical solution, a fillet or chamfer is provided at an end of the first extension and/or the second extension facing away from the connected second electrode plate unit.

In a further improvement scheme of the foregoing technical solution, the first filling member and/or the second filling member contains aluminum; or the first filling member and/or the second filling member contains an aluminum alloy; or the first filling member and/or the second filling member contains carbon fibers; or the first filling member and/or the second filling member contains a polymer.

In a further improvement scheme of the foregoing technical solution, the first insulating adhesive is provided with a first recess at a position opposite the first extension for accommodating the first extension.

In a further improvement scheme of the foregoing technical solution, one second electrode plate unit is provided with a third groove. The battery cell further includes a second tab, where one end of the second tab is mounted in the third groove, the other end extends out of the electrode assembly, and a void is present between the second tab and a side wall of the third groove. The battery cell further includes a third filling member, where the third filling member is mounted on the first electrode plate unit facing the third groove, the third filling member includes a third extension, and at least part of the third extension is configured to extend into the void.

Another embodiment of this application further provides an electric apparatus including any one of the battery cells described above.

### BRIEF DESCRIPTION OF DRAWINGS

To describe the technical solutions in some embodiments of this application more clearly, the following briefly describes the accompanying drawings required for describing some embodiments. Apparently, the accompanying drawings in the following description show only some embodiments of this application, and persons of ordinary skill in the art may still derive other drawings from structures shown in these accompanying drawings without creative efforts.
FIG. 1 is a schematic diagram of a battery cell according to an embodiment of this application;
FIG. 2 is a schematic cross-sectional view of the battery cell in FIG. 1 along line A-A;
FIG. 3 is a partial schematic cross-sectional view of an electrode assembly of the battery cell in FIG. 1 at the connection with a first tab;
FIG. 4 is a partial schematic cross-sectional view of an electrode assembly of the battery cell in FIG. 1 at the connection with a second tab; and
FIG. 5 is a schematic diagram of an electric apparatus according to an embodiment of this application.

In which:
1. battery cell;
100. housing;
200. electrode assembly; 210. first electrode plate; 220. second electrode plate; 230. separator; 211. first electrode plate unit; 212. first connecting unit; 213. first current collector unit; 214. first active substance layer unit; 215. first insulating rubber; 216. second insulating rubber; 217. third insulating adhesive; 218. fourth insulating adhesive; 221. second electrode plate unit; 222. second connecting unit; 223. second current collector unit; 224. second active substance layer unit; 225. first insulating adhesive; 226. second insulating adhesive; 227. third insulating rubber; 228. fourth insulating rubber; 231. separator unit; 232. separator connecting unit; 201. first groove; 202. second groove; 203. first mounting groove; 204. second mounting groove; 205. third groove; 206. fourth groove; 207. third mounting groove; 208. fourth mounting groove; 2011. side wall; 2012. first side wall unit; 2013. first connecting wall unit; 2051. side wall; 2052. second side wall unit; 2053. second connecting wall unit;
300. first tab;
400. first filling member; 410. first base; 420. first extension;
500. second filling member; 510. second base; 520. second extension;
600. second tab;
700. third filling member; 710. third base; 720. third extension;
800. fourth filling member; 810. fourth base; 820. fourth extension; and
2. electric apparatus.

### DESCRIPTION OF EMBODIMENTS

For ease of understanding this application, the following further describes this application in detail with reference to the accompanying drawings and specific embodiments. It should be noted that when an element is expressed as being "fastened/fixed" to another element, it may be directly fastened/fixed to the another element or one or more intermediate elements may be present. When an element is expressed as being "connected" to another element, it may be directly connected to the another element or one or more intermediate elements may be present. The terms "vertical", "horizontal", "left", "right", "inside", "outside", and similar expressions used in this specification are merely for description purposes.

Unless otherwise defined, all technical and scientific terms used herein shall have the same meanings as commonly understood by persons skilled in the art to which this application belongs. The terms used in the specification of this application are merely intended to describe specific embodiments but not to constitute any limitations on this application. The term "and/or" used herein includes any and all combinations of one or more associated items that are listed.

In addition, technical features involved in different embodiments of this application that are described below may be combined as long as they do not conflict with each other.

In this specification, "installing" includes fixing or limiting an element or apparatus to a specific location or place by means of welding, screwing, clamping, bonding, or the like. The element or apparatus may stay still at the specific position or place, or may move within a limited range. After being fixed or limited to the specific position or place, the element or apparatus can be disassembled or cannot be disassembled. This is not limited in the embodiments of this application.

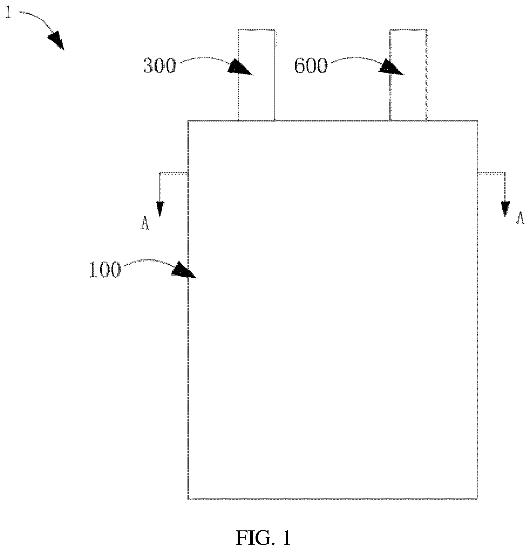

Refer to FIG. 1 to FIG. 3. FIG. 1 to FIG. 3 are respectively a schematic diagram of a battery cell 1 according to an embodiment of this application, a schematic cross-sectional view of the battery cell 1 along line A-A, and a partial schematic cross-sectional view of an electrode assembly 200 of the battery cell 1 at the connection with a first tab 300. The battery cell 1 includes a housing 100, an electrode assembly 200, a first tab 300, a first filling member 400, and a second tab 600. The housing 100 is a mounting and support matrix for the foregoing structures. The electrode assembly 200 is accommodated in the housing 100 and includes a first electrode plate unit 211, a second electrode plate unit 221, and a separator unit 231 stacked together, the first electrode plate unit 211 and the second electrode plate unit 221 have opposite polarities and are alternately arranged along a preset direction X shown in the figure, and the separator unit 231 is provided between the first electrode plate unit 211 and the second electrode plate unit 221 that are adjacent. One first electrode plate unit 211 is provided with a first groove 201, one end of the first tab 300 is mounted in the first groove 201, the other end extends out of the housing 100, and a gap is present between the first tab 300 and a side wall of the first groove 201. The first filling member 400 is mounted on the second electrode plate unit 221 facing the first groove 201, and at least part of the first filling member is configured to extend into the foregoing gap. One end of the second tab 600 is connected to one second electrode plate unit 221, and the other end extends out of the housing 100.

For the housing 100, specifically refer to FIG. 1. The housing 100 has a flat rectangular shape as a whole and is provided with an accommodating cavity (not shown in the figure) inside, and the accommodating cavity is configured to accommodate the electrode assembly 200 and the electrolyte. In this embodiment, the battery cell 1 is a pouch battery cell, and the housing 100 is an aluminum-plastic film. It can be understood that, in other embodiments of this application, the battery cell 1 may alternatively be a hard shell battery cell, and correspondingly, the housing 100 is a metal shell.

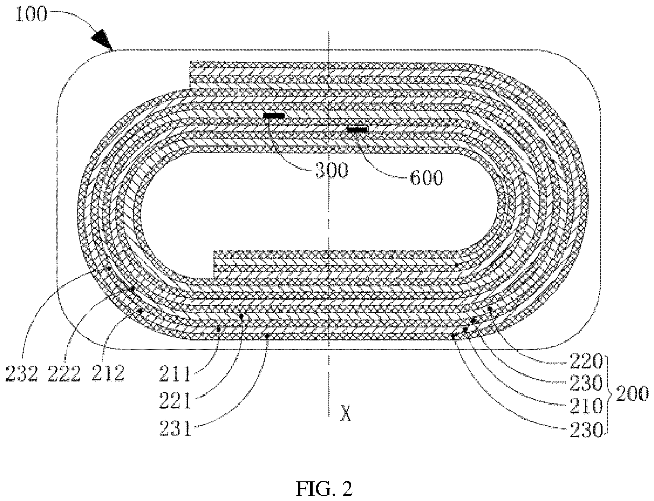

For the electrode assembly 200, referring first to FIG. 2 and in combination with FIG. 1, the electrode assembly includes a first electrode plate unit 211 and a second electrode plate unit 221 spaced apart from each other along a preset direction X shown in the figure, and a separator unit 231 disposed between and for separation of the first electrode plate unit 211 and the second electrode plate unit 221. The first electrode plate unit 211 and the second electrode plate unit 221 have opposite polarities; and one of the two electrode plate units is an anode plate unit and the other is a cathode plate unit. In this embodiment, the electrode assembly 200 is a wound structure, specifically including a first electrode plate 210, a second electrode plate 220, and a separator 230 stacked together. The first electrode plate 210 and the second electrode plate 220 are spaced apart from each other, the separator 230 is disposed between the first electrode plate 210 and the second electrode plate 220, and the first electrode plate 210, the second electrode plate 220, and the separator 230 are wound into a columnar structure with an oval cross section, so as to be accommodated in the accommodating cavity. The first electrode plate 210 is wound to form a plurality of first electrode plate units 211 extending straightly and a plurality of first connecting units 212 extending curvedly. The first electrode plate units 211 and the first connecting units 212 are alternately arranged, and the plurality of first electrode plate units 211 are spaced apart from each other along the preset direction X. Similarly, the second electrode plate 220 is wound to form a plurality of second electrode plate units 221 extending straightly and a plurality of second connecting units 222 extending curvedly. The second electrode plate units 221 and the second connecting units 222 are alternately arranged, and the plurality of second electrode plate units 221 and the plurality of first electrode plate units 211 are alternately arranged along the preset direction X. Similarly, the separator 230 is wound to form a plurality of separator units 231 extending straightly and a plurality of separator connecting units 232 extending curvedly. The separator units 231 and the separator connecting units 232 are alternately arranged, the separator unit 231 is disposed between the first electrode plate unit 211 and the second electrode plate unit 221 that are adjacent, and the separator connecting unit 232 is disposed between the first connecting unit 212 and the second connecting unit 222 that are adjacent. It should be understood that in this embodiment, the electrode assembly 200 is a wound structure, however, this application is not limited thereto. In other embodiments of this application, the electrode assembly 200 may alternatively be a stacked structure, that is, on the basis of this embodiment, the first connecting unit 212, the second connecting unit 222, and the separator connecting unit 232 are no longer included. It is worth adding that in this application document, the term "plurality" refers to an integer greater than 1.

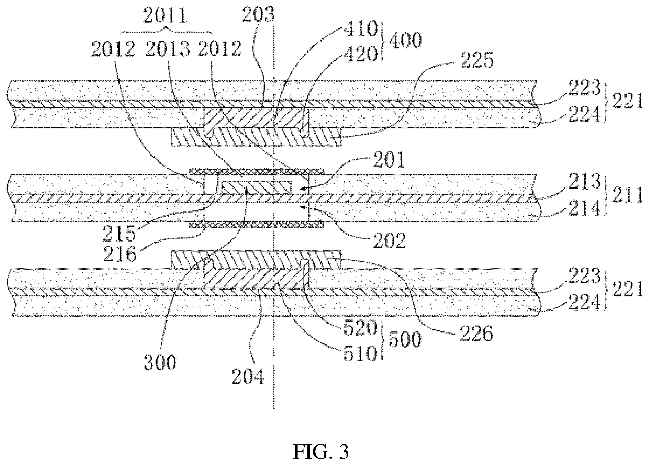

Next, specific structures of the first electrode plate unit 211 and the second electrode plate unit 221 are described in an example with the first electrode plate unit 211 as an anode plate unit and the second electrode plate unit 221 as a cathode plate unit. Certainly, in other embodiments of this application, the first electrode plate unit 211 may alternatively be a cathode plate unit, and correspondingly, the second electrode plate unit 221 is an anode plate unit. Referring to FIG. 3 (for the sake of clarity in the illustration, the separator unit is omitted in this drawing) and in combination with other drawings, the first electrode plate unit 211 includes a first current collector unit 213 and a first active substance layer unit 214. The first current collector unit 213 is in the shape of a flat strip and made of conductive metal foil. The first current collector unit 213 is a substrate to which the first active substance layer unit 214 is attached. Optionally, the first current collector unit 213 includes copper foil. Certainly, in other embodiments of this application, the first current collector unit 213 can alternatively be made of other conductive materials. The first active substance layer unit 214 is applied on surface of the first current collector unit 213, specifically on two opposite surfaces of the first current collector unit 213 in the foregoing preset direction X. Optionally, the first active substance layer unit 214 includes graphite. Certainly, in other embodiments of this application, the first active substance layer unit 214 can alternatively include other materials such as carbon with a structure similar to graphite.

Similarly, the second electrode plate unit 221 includes a second current collector unit 223 and a second active substance layer unit 224. The second current collector unit 223 is in the shape of a flat strip and also made of conductive metal foil. The second current collector unit 223 is a substrate to which the second active substance layer unit 224 is attached. Optionally, the second current collector unit 223 includes aluminum foil. Certainly, in other embodiments of this application, the second current collector unit 223 can alternatively be made of other conductive materials. The second active substance layer unit 224 is applied on surface of the second current collector unit 223, specifically on two opposite surfaces of the second current collector unit 223 in the foregoing preset direction X. Optionally, the second active substance layer unit 224 includes lithium manganate. Certainly, in other embodiments of this application, the second active substance layer unit 224 can alternatively include other materials such as lithium cobaltate or lithium iron phosphate.

For the first tab 300, still referring to FIG. 3 and in combination with other drawings, the first tab 300 is mounted on one first electrode plate unit 211. Specifically, the one first electrode plate unit 211 is provided with a first groove 201, one end of the first tab 300 is mounted in the first groove 201, and the other end extends out of the electrode assembly 200 and the housing 100, forming an external conductive terminal of the battery cell 1. More specifically, one first current collector unit 213 is not coated with the first active substance layer unit 214 at the place corresponding to the first tab 300, so as to form the first groove 201. A side wall 2011 of the first groove 201 includes two first side wall units 2012 and a first connecting wall unit 2013. The first side wall unit 2012 is arranged substantially parallel to the first tab 300. In an extension direction of a wide side of the first current collector unit 213, one end of the first side wall unit 2012 is located in the middle of the first current collector unit 213, and the other end extends to an edge of the first current collector unit 213. Two first side wall units 2012 are arranged opposite to each other. The first connecting wall unit 2013 is located in the middle of the first current collector unit 213 in the extension direction of the wide side and is connected to both the two first side wall units 2012. Preferably, to help place an end of the first tab 300 between the two first side wall units 2012 to facilitate the mounting process of the first tab 300, the width of the first groove 201 is greater than the width of the first tab 300. This means that a first gap is present between at least one of the first side wall units 2012 and the first tab 300; and optionally, the first gap is present between each of the two first side wall units 2012 and the first tab 300.

In this embodiment, the first tab 300 is fixed to the first current collector unit 213 by welding. Specifically, a side, facing away from the first tab 300, of the first current collector unit 213 connected to the first tab 300 is not coated with the first active substance layer unit 214 at the place corresponding to the first groove 201, thereby forming a second groove 202. The first groove 201 is provided to accommodate an end of the first tab 300, facilitate direct contact and welding between the first tab 300 and the first current collector unit 213, and help accommodate burrs formed during the welding of the first tab 300. The second groove 202 is provided to facilitate welding equipment to weld the first tab 300 and the first current collector unit 213, and help accommodate burrs formed during the welding of the first current collector unit 213, thereby reducing the risk of burrs being exposed to the surface of the first active substance layer unit 214. Therefore, it is easy to understand that in other embodiments of this application, if the first tab 300 is mounted on the first electrode plate unit 211 using a method other than welding, the depth of the first groove 201 may not extend to the surface of the first current collector unit 213. Similarly, the second groove 202 can also be adaptively omitted on this basis.

Further, the battery cell 1 also includes a first insulating rubber 215. The first insulating rubber 215 is fixed to the first electrode plate unit 211 connected to the first tab 300 and covers at least part of the opening of the first groove 201 on a side facing the adjacent second electrode plate unit 221; preferably, the first insulating rubber 215 fully covers the opening. In this way, the first insulating rubber 215 can reduce the contact area between the burrs and the separator unit 231, thereby reducing the risk of the burrs puncturing the separator unit 231 and causing a short circuit of the electrode assembly 200. Furthermore, the battery cell 1 also includes a second insulating rubber 216. The second insulating rubber 216 is fixed to the first electrode plate unit 211 connected to the first tab 300 and covers at least part of the opening of the second groove 202 on a side facing the adjacent second electrode plate unit 221; and preferably, the second insulating rubber 216 fully covers the opening. Similarly, the second insulating rubber 216 helps reduce the contact area between the burrs and the separator unit 231, thereby reducing the risk of the burrs puncturing the separator unit 231 and causing a short circuit of the electrode assembly 200.

For the first filling member 400, still referring to FIG. 3 and in combination with other drawings, the first filling member 400 is mounted on the second electrode plate unit 221 facing the first groove 201 and includes a first base 410 and a first extension 420. The first base 410 as a whole is in the form of a flat plate structure. The second electrode plate unit 221 is provided with a first mounting groove 203 adapted to the second electrode plate unit 221 at a corresponding position, and the first base 410 is mounted in the first mounting groove 203. Preferably, the thickness of the first base 410 is the same as the depth of the first mounting groove 203, so as to prevent the first base 410 from protruding relative to the second active substance layer unit 224 or reduce a protruding height of the first base 410. The first extension 420 is provided on a side of the first base 410 facing the first groove 201 and at least part of the first extension 420 is configured to extend into the first gap. In other words, with the first extension 420, the first filling member 400 at least partially extends into the gap between the first tab 300 and the side wall of the first groove. In this embodiment, the first extension 420 as a whole is in the form of a strip structure arranged approximately parallel to the first tab 300. After the first electrode plate unit 211, the separator unit 231, and the second electrode plate unit 221 are stacked, the first extension 420 at least partially extends into the first gap. Optionally, the first filling member 400 includes two first extensions 420, and the two first extensions 420 extend into the two first gaps in one-to-one correspondence. Certainly, in other embodiments of this application, the first filling member 400 may alternatively include only one first extension 420 or three or more first extensions 420, and a specific quantity of the first extensions 420 is not limited in this application. Preferably, the end of the first extension 420 facing away from the connected second electrode plate unit 221 is provided with a fillet and/or chamfer on a side close to the first tab 300, where the fillet and/or chamfer may be provided on a side of the first extension 420 close to the first tab 300 and/or a side facing the adjacent first side wall unit 2012. The provision of the fillet and/or the chamfer facilitates the first extension to extend into the first gap when each electrode plate unit is assembled, and can avoid the disadvantages if the first extension 420 is too sharp at that part and indirectly exerts pressure on the first tab 300 and the first active substance layer unit 214 through the separator unit 231 during the hot pressing process of battery cell 1.

It is worth mentioning that the provision of the first gap facilitates the mounting, welding and fixing processes for the first tab 300, but also makes the first electrode plate unit 211 susceptible to uneven force distribution at this place. This defect is likely to lead to lithium precipitation on the first electrode plate unit 211 at this place, resulting in poor interface of the first electrode plate unit 211, and also likely to cause the first active substance layer unit 214 to deform at the edge of the first groove 201 towards the first groove 201 and cause the first active substance layer unit 214 to fall off. In addition, the extremely small thickness of the first electrode plate unit 211 (that is, the thickness of the first current collector unit) at this place makes the first current collector unit 213 prone to fracturing at this place. With at least part of the first extension 420 extending into and filling the first gap to reduce the degree of uneven force distribution on the first electrode plate unit 211 at the first gap, the risk of lithium precipitation in the first groove 201 region of the first electrode plate unit 211 is reduced. In addition, the first extension 420 can reduce or eliminate space for the part of the first active substance layer unit 214 near the edge of the first groove to deform towards the first groove 201, thereby reducing or eliminating the risk that the active substance of the first active substance layer unit 214 at the first groove 201 is deformed towards the first groove 201 by force and falls off. In addition, when the battery cell 1 is subjected to an external force so that the first electrode plate unit 211 has a tendency to deform towards one side of the first filling member 400, the first extension 420 can indirectly support the first current collector unit 213, so as to reduce the risk of the first current collector unit 213 fracturing due to excessive deformation. Similarly, in the battery cell not including the first filling member 400, the active substance, at the place corresponding to the first groove 201, of the second electrode plate unit 221 facing the first groove 201 is also likely to deform towards the first groove 201 and fall off due to uneven force distribution; and the provision of the first filling member 400 can also overcome this deficiency.

It should be understood that even though the first filling member 400 in this embodiment includes a first base 410 and each of the first extensions 420 is disposed on the first base 410 and extends into the first gap, this application is not limited thereto, as long as it is guaranteed that at least part of the first filling member 400 extends into the gap between the first tab 300 and the side wall of the first groove. For example, in some other embodiments of this application, the gap between the first tab 300 and the side wall of the first groove 201 includes the first gap; and the first filling member 400 includes only the first extensions 420, and each of the first extensions 420 extends into the first gap. For another example, in still some other embodiments of this application, the gap between the first tab 300 and the side wall of the first groove 201 includes a second gap; and the second gap is a gap between the first tab 300 and the first connecting wall unit 2013. In this case, at least one of the first extensions 420 extends into the second gap. Still for another example, in some other embodiments of this application, the gap between the first tab 300 and the side wall of the first groove 201 includes both the first gap and the second gap; and part of the first extension 420 extends into the first gap, and another part of the first extension extends into the second gap.

To further reduce the risk of the first current collector unit 213 fracturing when the battery cell 1 is subjected to an external force, the electrode assembly 200 has a second electrode plate unit 221 on each of two sides of the first electrode plate unit 211 connected to the first tab 300. The battery cell 1 further includes a second filling member 500 mounted on the second electrode plate unit 221 facing the second groove 202, and at least part of the second filling member 500 extends into the second groove 202. Similar to the first filling member 400, the second filling member 500 includes a second base 510 and a second extension 520. The second electrode plate unit 221 facing the second groove 202 is provided with a second mounting groove 204 at the place corresponding to the second groove 202, and the second base 510 is mounted in the second mounting groove 204. Optionally, the second mounting groove 204 is formed at the place of the second current collector unit 223 corresponding to the second groove 202 and not coated with the second active substance layer unit 224, and the second base 510 is fixed to the second current collector unit 223 by welding. It can be understood that, in other embodiments, the second base 510 can alternatively be fixed to the second electrode plate unit 221 using other methods such as bonding. The second extension 520 is provided on a side of the second base 510 facing the second groove 202 and extends into the second groove 202. Specific shapes of the second base 510 and the second extension 520 can refer to the first base 410 and the first extension 420. Details are not repeated herein. Optionally, the second filling member 500 includes two second extensions 520, and each of the second extensions 520 corresponds to the first extension 420 in position. Therefore, when the battery cell 1 is subjected to an external force so that the first electrode plate unit 211 has a tendency to deform towards one side of the second filling member 500, the second extension 520 can indirectly support the first current collector unit 213, so as to reduce the risk of the first current collector unit 213 fracturing due to excessive deformation.

Materials available for the first filling member 400 and the second filling member 500 actually are diverse. Taking the first filling member 400 as an example, in this embodiment, the material of the first filling member 400 includes 7075 aluminum alloy, and the first filling member 400 is fixed to the second current collector unit 223 by welding or bonding. The 7075 aluminum alloy has advantages such as high strength and low density, so the overall weight of the battery cell 1 can be kept as small as possible while sufficient strength is ensured. It can be understood that, in other embodiments of this application, the material of the first filling member 400 may alternatively include elemental aluminum metal, elemental metals other than aluminum, other metal alloys, carbon fiber blocks, or polymers such as plastics and rubbers, or may be at least two of the above materials. It is worth noting that in selecting a metal element or alloy, materials that undergo chemical reactions with properties same as the anode plate during charge and discharge of the battery cell 1 should be avoided, such as oxidation reactions during discharge or reduction reactions during charge. Specifically, in this embodiment, the second electrode plate unit 221 is a cathode plate unit, and the first filling member 400 is preferably elemental aluminum or aluminum alloy similar to the second current collector unit 223, while in an embodiment in which the second electrode plate unit 221 is an anode plate, the first filling member 400 is preferably elemental copper or a copper alloy the same or similar to the material of the first current collector unit 213. The foregoing considerations may be disregarded when non-metallic materials are selected for the first filling member 400. The material selection method for the second filling member 500 is basically the same as that for the first filling member 400, and reference can be made to the descriptions for the first filling member 400. Details are repeated herein. It is worth mentioning that since the first electrode plate unit 211 does not contain any active substance at the first groove 201 and the second groove 202, the two second electrode plate units 221 adjacent to the first tab 300 do not substantially exchange lithium ions with the first electrode plate unit 211 at corresponding positions. In other words, the provision of the first filling member 400 and the second filling member 500 does not cause a decrease in the energy density of the battery cell 1.

Further, to reduce the risk of burrs on the surface of the first filling member 400 puncturing the separator unit 231, the battery cell 1 also includes a first insulating adhesive 225. Specifically, the first insulating adhesive 225 corresponds to the first filling member 400, is fixed to the second electrode plate unit 221 connected to the first filling member 400, and covers an exposed part of the first filling member 400 relative to the second electrode plate unit, thereby covering and shielding the burrs on the surface of the first filling member 400. Correspondingly, the first insulating adhesive 225 forms a first recess at a position opposite the first extension 420, for accommodating the first extension 420. It is worth mentioning that burrs may also be present in the weld marks formed by welding between the first filling member 400 and the second current collector unit 223, and the provision of the first insulating adhesive 225 can also cover and shield the burrs of the weld marks, thereby further reducing the risk of the separator unit 231 being punctured.

Similarly, to reduce the risk of burrs on the surface of the second filling member 500 puncturing the separator unit 231, the battery cell 1 also includes a second insulating adhesive 226. Specifically, the second insulating adhesive 226 corresponds to the second filling member 500, is fixed to the second electrode plate unit 221 connected to the second filling member 500, and covers an exposed part of the second filling member 500 relative to the second electrode plate unit 221, thereby covering and shielding the burrs on the surface of the second filling member 500. Correspondingly, the second insulating adhesive 226 forms a second recess at a position opposite to the second extension 520, for accommodating the second extension 520. It is worth mentioning that burrs may also be present in the weld marks formed by welding between the second filling member 500 and the second current collector unit 223, and the provision of the second insulating adhesive 226 can also cover and shield the burrs of the weld marks, thereby further reducing the risk of the separator unit 231 being punctured.

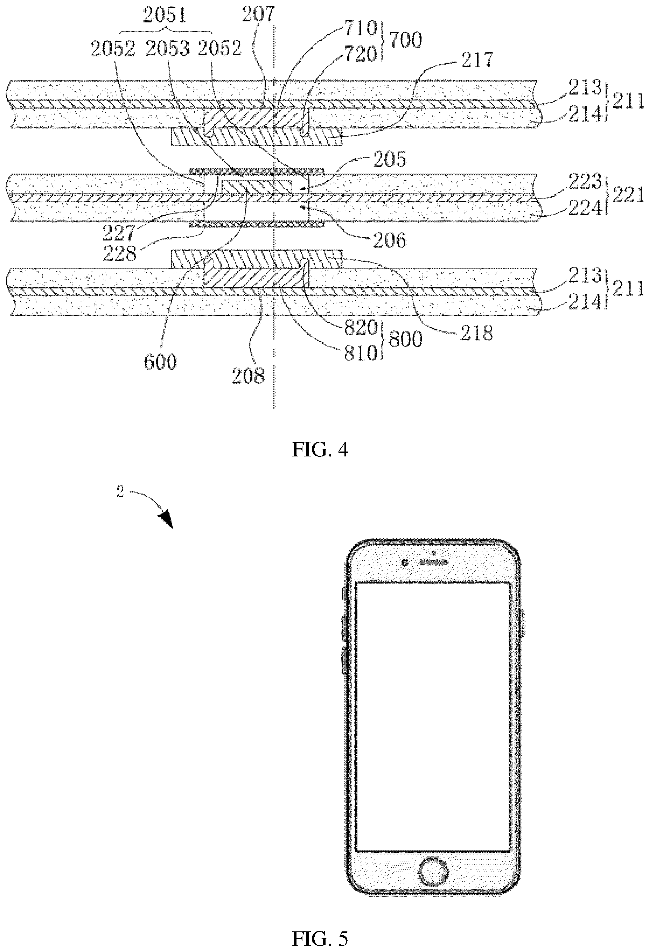

For the second tab 600, in combination with FIG. 1 to FIG. 3, the second tab 600 is connected to the second electrode plate unit 221 and extends out of the housing 100, forming another conductive terminal of the battery cell 1. In this embodiment, the second tab 600 is arranged in a way similar to the first tab 300. Specifically, refer to FIG. 4. FIG. 4 is a partial schematic cross-sectional view of an electrode assembly 200 of the battery cell 1 at the connection with the second tab 600 (for the sake of clarity in the illustration, the separator unit is omitted in the drawing). One second electrode plate unit 221 is provided with a third groove 205, one end of the second tab 600 is mounted in the third groove 205, and the other end extends out of the electrode assembly 200 and the housing 100, forming an external conductive terminal of the battery cell 1. More specifically, one second current collector unit 223 is not coated with the second active substance layer unit 224 at the place corresponding to the second tab 600, so as to form the third groove 205. A void is present between the side wall 2051 of the third groove 205 and the second tab 600, and the side wall 2051 of the third groove 205 includes two second side wall units 2052 and a second connecting wall unit 2053. The second side wall unit 2052 is arranged substantially parallel to the second tab 600; in an extension direction of the wide side of the second current collector unit 223, one end of the second side wall unit 2052 is located in the middle of the second current collector unit 223, and the other end extends to an edge of the second current collector unit 223. Two second side wall units 2052 are arranged opposite to each other. The second connecting wall unit 2053 is located in the middle of the second current collector unit 223 in the extension direction of the wide side and is respectively connected to the two second side wall units 2052. Preferably, to help place an end of the second tab 600 between the two second side wall units 2052 and thereby facilitate the mounting process of the second tab 600, the width of the third groove 205 is greater than the width of the second tab 600. This means that a first void is present between at least one second side wall unit 2052 and the second tab 600; and optionally, the first void is respectively present between the two second side wall units 2052 and the second tab 600.

In this embodiment, the second tab 600 is fixed to the second current collector unit 223 by welding. Specifically, on a side facing away from the second tab 600, the second current collector unit 223 connected to the second tab 600 does not have the second active substance layer unit 224 applied at the place corresponding to the third groove 205, thereby forming a fourth groove 206. The third groove 205 is provided to accommodate an end of the second tab 600, facilitate direct contact and welding between the second tab 600 and the second current collector unit 223, and help accommodate burrs formed during the process of welding the second tab 600. The fourth groove 206 is provided to facilitate welding equipment to weld the second tab 600 and the second current collector unit 223, and help accommodate burrs formed during the welding process of the second current collector unit 223, thereby reducing the risk of burrs being exposed to the surface of the first active substance layer unit 214. Therefore, it is easy to understand that in other embodiments of this application, if the second tab 600 is mounted on the second electrode plate unit 221 using a method other than welding, the depth of the third groove 205 may not extend to the surface of the second current collector unit 223. Similarly, the fourth groove 206 can also be adaptively omitted on this basis.

Further, the battery cell 1 also includes a third insulating rubber 227. The third insulating rubber 227 is fixed to the second electrode plate unit 221 connected to the second tab 600 and covers at least part of the opening of the third groove 205 on a side facing the adjacent first electrode plate unit 211; and preferably, the third insulating rubber 227 fully covers the opening. In this way, the third insulating rubber 227 can reduce the contact area between the burrs and the separator unit 231, thereby reducing the risk of the burrs puncturing the separator unit 231 and causing a short circuit of the electrode assembly 200. Further, the battery cell 1 also includes a fourth insulating rubber 228. The fourth insulating rubber 228 is fixed to the second electrode plate unit 221 connected to the second tab 600 and covers at least part of the opening of the fourth groove 206 on a side facing the adjacent first electrode plate unit 211; and preferably, the fourth insulating rubber 228 fully covers the opening. Similarly, the fourth insulating rubber 228 helps reduce the contact area between the burrs and the separator unit 231, thereby reducing the risk of the burrs puncturing the separator unit 231 and causing a short circuit of the electrode assembly 200.

It is worth mentioning that the provision of the first gap facilitates the process of welding to fix the second tab 600, but also makes the second electrode plate unit 221 susceptible to uneven force distribution at this place. This defect is likely to lead to lithium precipitation on the second electrode plate unit 221 at this place, resulting in poor interface of the second electrode plate unit 221, and also likely to cause the second active substance layer unit 224 to deform at the edge of the third groove 205 towards the third groove 205 and cause the second active substance layer unit 224 to fall off. In addition, the extremely small thickness of the second electrode plate unit 221 (that is, the thickness of the second current collector unit) at this place makes the second current collector unit 223 prone to fracturing at this place. To overcome the foregoing deficiency, the battery cell 1 further includes a third filling member 700. Specifically, the first filling member 400 is mounted on the second electrode plate unit 221 facing the third groove 205. Specifically, the third filling member 700 includes a third base 710 and a third extension 720. The third base 710 as a whole is in the form of a flat plate structure. The second electrode plate unit 221 is provided with a third mounting groove 207 adapted to the second electrode plate unit 221 at a corresponding position, and the third base 710 is mounted in the third mounting groove 207. Preferably, the thickness of the third base 710 is the same as the depth of the third mounting groove 207, so as to prevent the third base 710 from protruding relative to the first active substance layer unit 214 or reduce a protruding height of the third base 710. The third extension 720 is provided on a side of the third base 710 facing the third groove 205 and at least part of the third extension 720 extends into the first void. In other words, with the third extension 720, the third filling member 700 at least partially extends into the gap between the second tab 600 and the side wall of the third groove. In this embodiment, the third extension 720 as a whole is in the form of a strip structure arranged approximately parallel to the second tab 600. After the first electrode plate unit 211, the separator unit 231, and the second electrode plate unit 221 are stacked, the third extension 720 at least partially extends into the first void. Optionally, the third filling member 700 includes two third extensions 720, and the two third extensions 720 extend into the two first voids in one-to-one correspondence. Certainly, it can be understood that, in other embodiments of this application, the third filling member 700 may alternatively include only one first extension 420 or three or more third extensions 720, and a specific quantity of the third extensions 720 is not limited in this application. Preferably, a fillet and/or chamfer is provided on one end of the third extension 720 facing away from the connected first electrode plate unit 211, where the fillet and/or chamfer may be provided on a side of the third extension 720 close to the second tab 600 and/or a side facing the adjacent first side wall unit 2012. The provision of the fillet and/or the chamfer facilitates the third extension 720 to extend into the first void when each electrode plate unit is assembled, and can avoid the disadvantages if the third extension 720 is too sharp at that part and indirectly exerts pressure on the second tab 600 and the second active substance layer unit 224 through the separator unit 231 during the hot pressing process of battery cell 1.

It should be understood that even though the third filling member 700 in this embodiment includes a third base 710 and each third extension 720 is disposed on the third base 710 and extends into the first void, this application is not limited thereto, as long as it is guaranteed that at least part of the third filling member 700 extends into the void between the second tab 600 and the side wall of the third groove 205. For example, in some other embodiments of this application, the void between the second tab 600 and the side wall of the third groove 205 includes the first void; and the third filling member 700 only includes the third extensions 720, and each third extension 720 extends into the first void, respectively. For another example, in still some other embodiments of this application, the void between the second tab 600 and the side wall of the third groove 205 includes a second void; and the second void is a gap between the second tab 600 and the second connecting wall unit 2053. In this case, at least one third extension 720 extends into the second void. Still for another example, in some other embodiments of this application, the void between the second tab 600 and the side wall of the first groove 201 includes both the first void and the second void; and part of the third extension 720 extends into the first void, and part of the third extension 720 extends into the second void.

With at least part of the third extension 720 extending into and filling the first void to reduce the degree of uneven force distribution on the second electrode plate unit 221 at the first void, the risk of lithium precipitation in the third groove 205 region of the second electrode plate unit 221 is reduced. Also, the third extension 720 can reduce or eliminate space for the part of the second active substance layer unit 224 near the edge of the third groove 205 to deform towards the third groove 205, thereby reducing or eliminating the risk that the active substance of the second active substance layer unit 224 at the third groove 205 is deformed towards the third groove 205 by force and falls off. In addition, when the battery cell 1 is subjected to an external force so that the second electrode plate unit 221 has a tendency to deform towards one side of the third filling member 700, the third extension 720 can indirectly support the second current collector unit 223, so as to reduce the risk of the second current collector unit 223 fracturing due to excessive deformation. Similarly, in the battery cell not including the third filling member 700, the active substance of the first electrode plate unit 211 facing the third groove 205 and at the place corresponding to the third groove 205 is also likely to deform towards the third groove 205 and fall off due to uneven force distribution; and the provision of the third filling member 700 can also overcome this deficiency.

To further reduce the risk of the second current collector unit 223 connected to the second tab 600 fracturing when the battery cell 1 is subjected to an external force, the electrode assembly 200 has a first electrode plate unit 211 on two sides of the second electrode plate unit 221 connected to the second tab 600. The battery cell 1 further includes a fourth filling member 800 mounted on the first electrode plate unit 211 facing the fourth groove 206, and at least part of the fourth filling member 800 extends into the fourth groove 206. Similar to the third filling member 700, the fourth filling member 800 includes a fourth base 810 and a fourth extension 820. The first electrode plate unit 211 facing the fourth groove 206 is provided with a fourth mounting groove 208 at the place corresponding to the fourth groove 206, and the fourth base 810 is mounted in the fourth mounting groove 208. Optionally, the fourth mounting groove 208 is formed at the place of the second current collector unit 223 corresponding to the fourth groove 206 and not coated with the first active substance layer unit 214, and the fourth base 810 is fixed to the first current collector unit 213 by welding. It can be understood that, in other embodiments, the second base 510 can alternatively be fixed to the first current collector unit 213 using other methods such as bonding. The fourth extension 820 is provided on a side of the second base 510 facing the fourth groove 206 and extends into the fourth groove 206. Specific shapes of the fourth base 810 and the fourth extension 820 can refer to the third base 710 and the third extension 720. Details are not repeated herein. Optionally, the fourth filling member 800 includes two fourth extensions 820, and each fourth extension 820 corresponds to the third extension 720 in position, respectively. Therefore, when the battery cell 1 is subjected to an external force so that the second electrode plate unit 221 has a tendency to deform towards one side of the fourth filling member 800, the fourth extension 820 can indirectly support the second current collector unit 223, so as to reduce the risk of the second current collector unit 223 fracturing due to excessive deformation.

Materials available for the third filling member 700 and the fourth filling member 800 actually are diverse. Taking the third filling member 700 as an example, in this embodiment, the third filling member 700 includes copper and is fixed to the first current collector unit 213 by welding or bonding. It can be understood that, in other embodiments of this application, the material of the third filling member 700 may alternatively include elemental metals other than copper, other metal alloys, carbon fiber blocks, or polymers such as plastics and rubbers, or may be at least two of the above materials. It is worth noting that in selecting a metal element or alloy, materials that undergo chemical reactions with properties same as the cathode plate during charge and discharge of the battery cell 1 should be avoided, such as reduction reactions during discharge or oxidation reactions during charge. Specifically, in this embodiment, the second electrode plate unit 221 is a cathode plate unit, and the third filling member 700 is preferably elemental copper or copper alloy similar to the second current collector unit 223, while in an embodiment in which the second electrode plate unit 221 is an anode plate, the third filling member 700 is preferably elemental aluminum or an aluminum alloy the same or similar to the material of the second current collector unit 223. The foregoing considerations may be disregarded when non-metallic materials are selected for the third filling member 700. The material selection method for the fourth filling member 800 is basically the same as that for the third filling member 700, and reference can be made to the descriptions for the third filling member 700. Details are repeated herein. It is worth mentioning that since the second electrode plate unit 221 does not contain any active substance at the third groove 205 and the fourth groove 206, the two first electrode plate units 211 adjacent to the second tab 600 do not substantially exchange lithium ions with the second electrode plate unit 221 at corresponding positions. In other words, the provision of the third filling member 700 and the fourth filling member 800 does not cause a decrease in the energy density of the battery cell 1.

Further, to reduce the risk of burrs on the surface of the third filling member 700 puncturing the separator unit 231, the battery cell 1 also includes a third insulating adhesive 217. Specifically, the third insulating adhesive 217 corresponds to the third filling member 700, is fixed to the first electrode plate unit 211 connected to the third filling member 700, and covers an exposed part of the third filling member 700 relative to the first electrode plate unit, thereby covering and shielding the burrs on the surface of the third filling member 700 and the burrs in the weld marks formed during the process of welding between the third filling member 700 and the first current collector unit 213. Correspondingly, the third insulating adhesive 217 forms a third recess at a position opposite to the third extension 720, for accommodating the third extension 720.

Similarly, to reduce the risk of burrs on the surface of the fourth filling member 800 puncturing the separator unit 231, the battery cell 1 also includes a fourth insulating adhesive 218. Specifically, the fourth insulating adhesive 218 corresponds to the fourth filling member 800, is fixed to the first electrode plate unit 211 connected to the fourth filling member 800, and covers an exposed part of the fourth filling member 800 relative to the first electrode plate unit 211, thereby covering and shielding the burrs on the surface of the fourth filling member 800 and the burrs in the weld marks formed by the process of welding between the fourth filling member 800 and the first current collector unit 213. Correspondingly, the fourth insulating adhesive 218 forms a fourth recess at a position opposite to the fourth extension 820, for accommodating the fourth extension 820.

Table 1 shows a comparison result of the pressure test between the battery cells 1 according to an embodiment of this application and conventional battery cells, with testing condition as follows:
1. Test environment: fully charging battery cells at room temperature (25°C), then resting the battery cells for 24 hours to prepare for the pressure test;
2. Test pressure: using a cylindrical rod with a diameter of 6 mm and a length of 6.7 cm to apply pressure to the welding position of the battery cell housing corresponding to the first tab, with a rod extrusion speed of 300 N/min and an upper limit force for the test of 1300 N;
3. Test quantity: testing 20 samples for each type of battery cell; and
4. Test pass criteria: no fire and no explosion.

It can be seen from the result in Table 1 that the battery cells provided in the embodiment of this application can effectively improve the anti-extrusion performance of the battery cell. Specifically, during the process of applying pressure to the battery cell 1 using the cylindrical rod, the first filling member 400 and the second filling member 500 can reduce the degree of deformation of the first current collector unit 213 connected to the first tab 300, and reduce the degree of deformation and the risk of falling off of the active substance layer unit in the edge region of the first filling member 400 and the second filling member 500; and the third filling member 700 and the fourth filling member 800 can reduce the degree of deformation of the second current collector unit 223 connected to the second tab 600 and reduce the degree of deformation and the risk of falling off of the active substance layer unit in the edge region of the third filling member 700 and the fourth filling member 800. As a result, the battery cell 1 can reduce the risk of short circuit of the battery cell 1 to some extent.

**Table 1. Comparison result of pressure test between battery cells 1 and conventional battery cells**

| Test result | Battery cells according to an embodiment of this application | Conventional battery cells |
|---|---|---|
| Passed quantity/tested quantity | 20/20 | 14/20 |

Table 2 shows comparison results of the cycle tests between the battery cells 1 according to an embodiment of this application and conventional battery cells under two temperature environments, with testing condition as follows:
1. Test temperatures: 25°C/45°C (the temperature in Cycle test 1 is 25°C, and the temperature in Cycle test 2 is 45°C);
2. Test method:
   S11: resting 10 minutes (min); 1.3C CC (Constant current charging, constant current charging) to 4.16 V, CV (Constant voltage charging) to 1.0C, 1.0C CC to 4.28 V, and CV to 0.8C; then 0.8C CC to 4.47 V, and CV to 0.1C, where 1.3C CC to 4.16V means to charge the battery cells with a constant current at a rate of 1.3 times the rated current to a voltage of 4.16 V, and CV to 1.0C means to maintain the previous voltage of 4.16 V to charge the battery cells with a constant voltage until the current reaches 1 times the rated current; and other charging steps are deduced in the same way;
   S12: resting 10 min, then constant current discharging the battery cells until the voltage reaches 3.0 V;
   S13: resting 10 min; 1.3C CC to 4.16 V, CV to 1.0C, 1.0C CC to 4.28 V, and CV to 0.8C; then 0.8C CC to 4.47 V, and CV to 0.1C; and
   S14: repeating steps S12 and S13 100 times.
3. Test quantity: testing 10 samples for each type of battery cell; and
4. Test pass criteria: no lithium precipitation at tab slots.

From the results in Table 2, it can be seen that the battery cells provided in the embodiment of this application can effectively improve the interface performance of the battery cell electrode plate unit. Specifically, with at least part of the first extension 420 (or the third extension 720) extending into and filling the first gap (or the first void) to reduce the degree of uneven force distribution on the first electrode plate unit 211 at the first gap, the risk of lithium precipitation in the first groove 201 region of the first electrode plate unit 211 is reduced.

**Table 2. Comparison results of cycle tests between battery cells 1 and conventional battery cells under two temperatures**

| Test result | Battery cells according to an embodiment of this application | Conventional battery cells |
|---|---|---|
| Cycle test 1 (25°C) Quantity of battery cells with lithium precipitation at tab slots/tested quantity | 0/10 | 10/10 |
| Cycle test 2 (45°C) Quantity of battery cells with lithium precipitation at tab slots/tested quantity | 0/10 | 10/10 |

The battery cell 1 according to some embodiments of this application includes a housing 100, an electrode assembly 200, a first tab 300, and a first filling member 400. One first electrode plate unit 211 in the electrode assembly 200 is provided with a first groove 201, one end of the first tab 300 is mounted in the first groove 201, and a gap is present between the first tab 300 and a side wall of the first groove 201. The first filling member 400 is mounted on one second electrode plate unit 221, and at least part of the first filling member extends into the foregoing gap.

In the battery cells on the current market, the width of a groove on an electrode plate for mounting a tab is generally greater than the width of the tab, facilitating the tab mounting. However, a gap is accordingly formed between a side wall of the groove and the tab, and the presence of this gap is likely to lead to uneven force distribution on the electrode plate therein, which in turn leads to the disadvantages such as falling off of the electrode plate active substance and lithium precipitation at the interface. In contrast, the battery cells 1 according to an embodiment of this application can fill at least part of the gap through the first filling member 400 so that forces applied on the first electrode plate unit 211 at the first groove 201 can be made more even, improving the current situation of lithium precipitation on the surface of the electrode plate unit. In addition, the first filling member 400 reduces or eliminates the space of the part of the active substance layer unit near the edge of the first groove 201 towards the first groove, thereby reducing or eliminating the risk that the active substance at the first groove is deformed towards the first groove by force and falls off. In other words, the battery cell according to this embodiment of this application can reduce the risk that the active substance within the battery cell is easy to fall off.

Based on the same inventive concept, an embodiment of this application further provides an electric apparatus. Refer to FIG. 5. FIG. 5 is a schematic diagram of an electric apparatus 2 according to an embodiment of this application. The electric apparatus 2 includes the battery cell 1 according to the foregoing embodiments. In this embodiment, the electric apparatus 2 is a mobile phone. It can be understood that, in other embodiments of this application, the electric apparatus 2 may alternatively be a tablet computer, a computer, a drone, or another electric apparatus that needs to be driven by electricity. Since the battery cell 1 according to the foregoing embodiments is included, the electric apparatus 2 can also improve the current situation that the active substance inside the battery cell is easy to fall off.

Finally, it should be noted that the foregoing embodiments are merely intended to describe the technical solutions of this application, and are not intended to limit this application. Under the idea of this application, the foregoing embodiments or the technical features in different embodiments can also be combined, the steps can be implemented in any order, and there are many other changes in different aspects of this application as described above, which, for the sake of brevity, are not provided in detail. Although this application is described in detail with reference to the foregoing embodiments, persons of ordinary skill in the art should understand that modifications can be made to the technical solutions described in the foregoing embodiments, or equivalent substitutions can be made to some technical features therein, and these modifications or substitutions do not make the essence of the corresponding technical solutions depart from the scope of the technical solutions of the embodiments of this application.

## Claims

1. A battery cell, comprising an electrode assembly and a first tab, wherein the electrode assembly comprises a first electrode plate unit, a second electrode plate unit, and a separator unit stacked together, the first electrode plate unit and the second electrode plate unit have opposite polarities and are alternately arranged along a preset direction, and the separator unit is provided between the first electrode plate unit and the second electrode plate unit that are adjacent;
one first electrode plate unit is provided with a first groove, one end of the first tab is mounted in the first groove, the other end extends out of the electrode assembly, and a gap is present between the first tab and a side wall of the first groove; and
the battery cell further comprises a first filling member, wherein the first filling member is mounted on the second electrode plate unit facing the first groove, the first filling member comprises a first extension, and at least part of the first extension is configured to extend into the gap.

2. The battery cell according to claim 1, wherein the side wall of the first groove comprises two first side wall units and a first connecting wall unit, the two first side wall units are arranged opposite to each other, the first connecting wall unit is connected to both the two first side wall units, and a first gap is present between at least one first side wall unit and the first tab; and
at least part of the first extension is configured to extend into the first gap.

3. The battery cell according to claim 2, wherein the first gap is present between each of the two first side wall units and the first tab; and
the first filling member comprises two first extensions, and at least part of each of the first extensions is configured to extend into the corresponding first gap.

4. The battery cell according to claim 1, wherein the first filling member comprises a first base;
the second electrode plate unit connected to the first filling member is provided with a first mounting groove at the place corresponding to the first filling member, and the first base is mounted in the first mounting groove; and
the first extension is disposed at an end of the first base facing the first groove.

5. The battery cell according to claim 1, further comprising a first insulating adhesive, wherein
the first insulating adhesive is fixed to the second electrode plate unit connected to the first filling member and covers an exposed part of the first filling member relative to the connected second electrode plate unit.

6. The battery cell according to claim 1, further comprising a first insulating rubber,
wherein
the first insulating rubber is fixed to the first electrode plate unit connected to the first tab and covers at least part of the opening of the first groove on a side facing the first filling member.

7. The battery cell according to claim 1, wherein two sides of the first electrode plate unit connected to the first tab each are provided with the second electrode plate unit, and the first electrode plate unit connected to the first tab is provided with a second groove on a side facing away from the first groove; and
the battery cell further comprises a second filling member, wherein the second filling member is mounted on the second electrode plate unit facing the second groove, the second filling member comprises a second extension, and at least part of the second extension is configured to extend into the second groove.

8. The battery cell according to claim 7, wherein the second filling member comprises two second extensions, and each of the second extensions corresponds to one of the first extensions in position.

9. The battery cell according to claim 7, further comprising a second insulating adhesive wherein
the second insulating adhesive is fixed to the second electrode plate unit connected to the second filling member and covers an exposed part of the second filling member relative to the connected second electrode plate unit.

10. The battery cell according to claim 7, wherein a fillet or chamfer is provided at an end of the first extension and/or the second extension facing away from the connected second electrode plate unit.

11. The battery cell according to claim 7, wherein the material of the first filling member and/or the second filling member comprises aluminum; or
the material of the first filling member and/or the second filling member comprises an aluminum alloy; or
the material of the first filling member and/or the second filling member comprises carbon fibers; or
the material of the first filling member and/or the second filling member comprises a polymer.

12. The battery cell according to any one of claims 1 to 11, wherein one second electrode plate unit is provided with a third groove;
the battery cell further comprises a second tab, wherein one end of the second tab is mounted in the third groove, the other end extends out of the electrode assembly, and a void is present between the second tab and a side wall of the third groove; and
the battery cell further comprises a third filling member, wherein the third filling member is mounted on the first electrode plate unit facing the third groove, the third filling member comprises a third extension, and at least part of the third extension is configured to extend into the void.

13. An electric apparatus, comprising the battery cell according to any one of claims 1 to 12.
